# EUROPEAN PATENT SPECIFICATION

(11) **EP 2 625 794 B1**
(45) Date of publication and mention of the grant of the patent: **07.01.2015**
(21) Application number: 10762682.2
(22) Date of filing: 07.10.2010
(51) Int. Cl.: H04B 3/54

(54) **METHOD AND APPARATUS FOR REMOTE METERING THE CONSUMPTION OF ELECTRICITY OVER POWER LINE NETWORK**
VERFAHREN UND VORRICHTUNG ZUR FERNMESSUNG DES VERBRAUCHS VON STROM IN EINEM ENERGIEVERTEILUNGSNETZ
PROCÉDÉ ET APPAREIL DE MESURE À DISTANCE DE LA CONSOMMATION D'ÉLECTRICITÉ SUR UN RESEAU DE LIGNE D'ALIMENTATION

(43) Date of publication of application: 14.08.2013
(73) Proprietor: Enel Distribuzione S.p.A., 00198 Roma (IT)
(72) Inventor: VERONI, Fabio, I-20059 Vimercate - Milano (IT)
(74) Representative: Hoffmann Eitle
(86) International application number: PCT/EP2010/065008
(87) International publication number: WO 2012/045357

(56) References cited:
- WO-A1-96/06478
- US-A1- 2007 194 949
- US-A1- 2009 256 686

## Description

The present invention relates to an apparatus and a method for detecting communication associations in an electricity distribution network implementing remote metering of energy consumptions.

In an electricity distribution network the remote metering of energy consumptions is a desirable and advantageous feature. Remote metering requires that communication facilities are available for collecting data relating to the consumption of energy of a large number of customers. Such communication facilities typically have a hierarchical structure wherein a central management facility is in communication with a number of concentrators. Each concentrator in turn is in communication with a number of electricity meters located at the customer premises. The communication between a concentrator and its associated electricity meters can take place by means of power line communication over the low voltage network section to which both the concentrators and the electricity meters at the customer locations are connected.

A concentrator manages a plurality of meters associated with it. The concentrator stores a list of meters which are expected to communicate with the concentrator. In order to be able to carry out the automatic meter reading and/or automatic meter management functions, the concentrator tries to establish communication with each of the meters on the list, either by direct transmission of messages between the concentrator and the meter, or by means of using intermediate relays along the communication path between the concentrator and the meter. The list of meters with which the concentrator is expected to communicate, may have been preconfigured or compiled at the time of installation of the concentrator, or may be downloaded into the concentrator from the central management facilities. This list may change from time to time whenever a new meter is added to or removed from the section or sections of the electricity distribution network managed by the concentrator. The list may be stored in the concentrator itself and/or may be stored elsewhere, for example at a central management facility where the concentrator can access this list whenever it needs to do so.

Quite obviously, any lack of communication capabilities between a meter and its concentrator is a serious concern. For example, the situation may arise that a concentrator has a meter listed with which the concentrator is expected to communicate, but the meter and the concentrator are unable to establish communication. This can have several reasons.

One possible reason is that due to a lack of precise information about the topology of the network, the meter is connected to a section of the electricity distribution network that is managed by another concentrator than the concentrator on which the meter is listed.

Another possibility is that a meter is connected to a remote network section that is connected with a concentrator on which the meter is listed, but due attenuation and/or noise floor, the range of communications signals used by the concentrator and/or meter are insufficient and no relay is available along the line.

In this situation it might even be possible that a different network section connected to another concentrator is parasitically coupled with the remote network section such that communication signals can couple (cross-talk phenomena) from one section into the other and the other concentrator would be able to communicate with the meter.

US2009/256686 discloses a power line communication system including a plurality of intelligent devices in communication with a power line and operable to monitor energy usage at a site and communicate usage data onto the power line.

US 5,912,633 discloses a router for determining routes to meters via intermediate meters. If communication with a meter is found to be impossible through any of the stored routes for that meter, then the meter is regarded as lost. No further remedy is offered in that document if this happens.

US2006/0085346 A1 relates to automated topology discovery. The data concentrator tries to reach non-commissioned meters via proxies automatically. Each concentrator tries to find a list of meters and a route to each meter. Accordingly, unreachable meters remain unknown to the concentrator. In this document the assumption is that in such a situation the meter will be automatically detected by another concentrator.

WO95/01030 discloses a topology monitoring system wherein the central station gradually constructs a map of the system. Also this document does not take into consideration that a meter may not be reachable by any concentrator for the reason that one concentrator not in communication association with the meter lists the meter as belonging to the concentrator while all other concentrators do not list the meter.

Accordingly, in order to be able to remedy in an efficient way a situation that a meter cannot communicate with the concentrator on which it is listed, it would be desirable to be able to acquire knowledge about which concentrator is able to communicate with which section or sections of the electricity distribution network, or in other words, it would be desirable to be able to acquire knowledge about the communication associations between concentrators and network sections of the electricity distribution network.

The present invention provides an apparatus for detecting communication associations in an electricity distribution network implementing remote metering of electric energy consumptions, the electricity distribution network comprising a plurality of sections (A1, A2, ..., B1, B2, ...) and one or more concentrators (CA, CB) connected to the electricity distribution network, each concentrator being capable of communicating via power line communication with electricity meters connected to one or more electricity distribution network sections in communication association with the concentrator, each concentrator storing a list comprising identities of electricity meters connected to the electricity distribution network and expected to communicate via power line communication with the concentrator. The apparatus comprises a storage section for importing information about meters listed on a first concentrator as well as information at least about meters listed on a second concentrator, the imported information comprising for each meter an identification of the meter, an indication on which concentrator the respective meter is listed; an interface suitable for temporarily connecting the apparatus to a section under investigation of the electricity distribution network; a power line communication part for sending invitations to respond over the section under investigation and for receiving responses over the section under investigation from electricity meters connected to the electricity distribution network; and a processing section for evaluating the received responses, taking into account on which concentrator the meters responding to the invitations are respectively listed.

The evaluation of the received responses may include counting the number of responding meters listed on a respective concentrator. From the evaluation it may be derived with which concentrator the section under investigation is in communication association. For example, the apparatus may be adapted to evaluate on which particular concentrator some responding meters or the largest proportion of all responding meters is listed. It may be assumed that the network section under investigation is communication associated with that concentrator.

According to an embodiment of the present invention, the imported information further comprises for each meter either a 'good' indication indicating that the meter is able to communicate with the concentrator on which the meter is listed, or a 'bad' indication indicating that the meter is not able to communicate with the concentrator on which the meter is listed. The 'good' indication and the 'bad' indication can be implemented in any suitable manner, for example by means of a flag or a dedicated bit. Preferably, the evaluation on which concentrator the meters responding to the invitations are respectively listed, uses the meters having a 'good' indication and ignores the meters having a 'bad' indication.

The invitations can be point to point messages. In this particular embodiment the information in the storage section about meters listed on a first concentrator and meters listed on a second concentrator as well as meters listed on one or more further concentrators may have been imported from the concentrators themselves, from the central management facility or from any other suitable source for providing this information. Point to point messages allow selectively addressing meters indicated as 'good'.

It can be advantageous to selectively send invitations to meters indicated as 'bad'. This offers additional diagnostic information. For example, in this way the identities of meters connected to the network section under investigation and listed on concentrators not in communication association with the network section under investigation can be found out.

The invitations may also be sent using a broadcast message. Each meter responding to a broadcast message may then import the information into the storage section by responding with its own ID as well as information about the concentrator on which it is listed. In this particular embodiment, the information about meters stored in the storage section can be but need not be imported separately.

Preferably, said processing section is adapted to evaluate how many responding meters indicated as 'good' are respectively listed on the respective concentrators. Preferably, the processing section is adapted to detect the identity of meters not listed on any one of the first and second concentrators.

The apparatus may comprise display means for displaying information relating to the result of the evaluation. Additionally or alternatively, the apparatus may comprise a data port, e.g. optical, USB, LAN, serial, parallel or any other suitable port for outputting said information to a PC. The port may be bidirectional such that the PC can be used to control the operation of the apparatus. Of course, the apparatus may also have its own dedicated control elements.

Preferably, the storage section is adapted for importing information not only about meters listed on the first and second concentrators, but also about meters listed on one or more additional concentrators. The imported information preferably comprises for each meter an identification of the meter, an indication on which concentrator the respective meter is listed, and preferably also a 'good'/'bad' indication indicating whether the meter is able to communicate with the concentrator on which the meter is listed.

A method according to an embodiment of the present invention for detecting communication associations in an electricity distribution network implementing remote metering of electric energy consumptions comprises the steps of importing into a memory information about meters listed on a first concentrator as well as information at least about meters listed on a second concentrator, the imported information comprising for each meter an identification of the meter, an indication on which concentrator the respective meter is listed, sending invitations to respond over the section under investigation to electricity meters and receiving responses over the section under investigation from electricity meters connected to the electricity distribution network; and evaluating the received responses, taking into account on which concentrator the meters responding to the invitations are respectively listed.

According to an embodiment of the invention, the imported information further comprises for each meter either a 'good' indication indicating that the meter is able to communicate with the concentrator on which the meter is listed, or a 'bad' indication indicating that the meter is not able to communicate with the concentrator on which the meter is listed.

According to an embodiment of the present invention, a computer like a PC may be programmed to carry out a method in accordance with the present invention. The computer may interface with dedicated apparatus for connection with the network section under investigation, or may interface with a conventional electricity meter equipped for remote metering in order to take advantage of the existing power line communication part present in such meter. The present invention also relates to a computer program product comprising code executable by a computer which code when executed by the computer causes the computer to carry out a method according to an embodiment of the present invention.

In the following, embodiments of the present invention will be illustrated with reference to the accompanying drawings. In these drawings,
Fig. 1 shows an exemplary embodiment of a portion of an electricity distribution network implementing remote metering of electricity consumptions; and
Fig. 2 shows an exemplary embodiment of an apparatus according to the present invention.

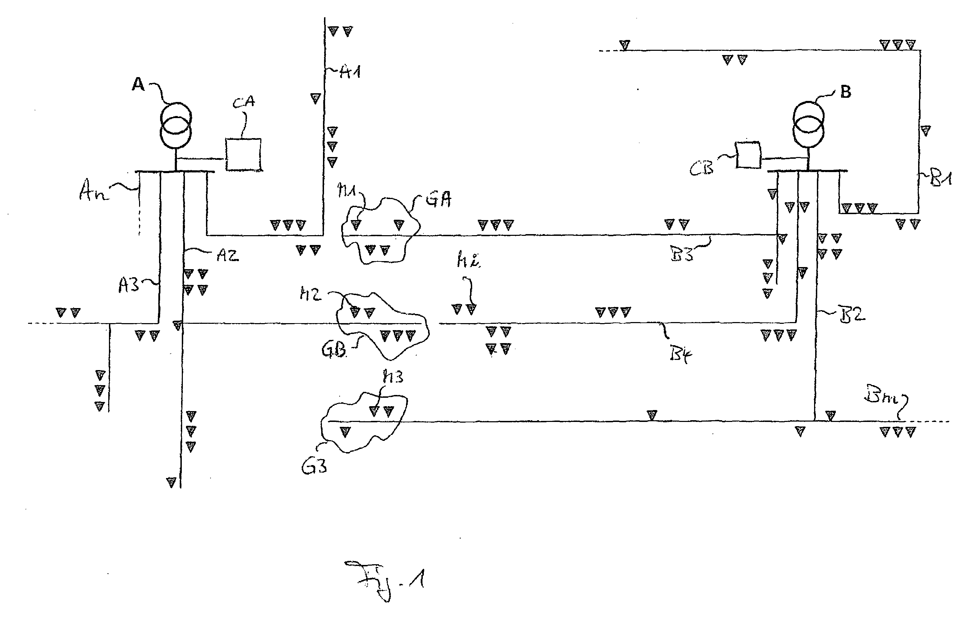

Fig. 1 shows an exemplary embodiment of a portion of an electricity distribution network implementing remote metering of electricity consumptions. In Fig. 1, A and B respectively denote secondary transformer stations. Each of the secondary transformer stations A and B respectively feeds low voltage sections of the electricity distribution network. In the exemplary illustration of Fig. 1, the secondary transformer station A feeds a plurality of network sections A1, A2, A3, ... An. The secondary station B feeds network sections B1, B2, B3, ... Bm.

CA denotes a concentrator connected to the vicinity of the feed point of secondary station A in order to act as a master in a communication network using the low voltage power lines of the network sections A1, A2, A3, ... An of the electricity distribution network portion fed by the secondary station A. M1, M2, M3, Mi denote electricity meters connected to respective low voltage network sections. The meters are associated with various consumers of electric energy. Each of these meters has a remote metering capability and communicates with a concentrator in measuring, collecting, processing and transmitting the respective energy consumptions. In the exemplary illustration of Fig. 1, concentrator CA has a list of electricity meters connected to the sections of the energy distribution network supplied by the secondary station A. Similarly, the concentrator CB is connected to secondary station B in order to act as a master in a communication network that uses the low voltage power lines of the network sections B1, B2, B3, ..., Bm fed by secondary station B. Concentrator CB has a list of all electricity meters with which the concentrator CB is expected to communicate in carrying out the task of remote metering the energy consumptions of a larger number of consumers. Of course, the concentrators CA and CB may be placed at different locations than in proximity to the secondary substation A and B, respectively.

The lists of meters stored in the respective concentrators CA and CB respectively identify each of the meters which are expected to communicate with the respective concentrator. A meter is typically added to the list when it is installed in a network section for which section it is assumed that it is in communication association with that concentrator. The list preferably also includes an indication whether the respective concentrator is in fact able to establish communication with the respective meters listed on the concentrator. The list may of course additionally include other information like path information indicating for each meter a chain of relays, typically other electricity meters, over which a particularly meter can be reached. The concentrator collects metering data from each of the meters it has listed, provided the concentrator is in fact able to establish communication with the respective meter.

In a network as shown in exemplary fashion on Fig. 1, the situation may arise that a meter or a group of meters is listed on a particular concentrator, and that the particular concentrator is unable to establish communication with the concentrator on which these meters are listed. To illustrate this, Fig. 1 shows a group GA of meters including the meter denoted with M1, which meters are listed on concentrator CA although the network section B3 to which this group GA of meters is connected, is fed by the secondary station B and connected to the concentrator CB. Other meters Mi are listed on concentrator CB and connected to a network section B4 connected to the concentrator CB. At the time of installation of the meters in group GA, the knowledge about the topology of the network might have been insufficient such that the section to which the meters in group GA is connected, has erroneously been assumed to be a section connected to substation A. As a consequence, the meters in group GA were added to the list of concentrator CA. The concentrator CA is expected to communicate with these meters but is unable to do so because a communication channel between the concentrator CA and the meters in group GA does not exist.

The group GB of meters including the meter M2 serves to illustrate another possible scenario. The meters in group GB are all connected to network sections fed by the secondary substation A and connected to the concentrator CA. However, due to the remote location of the meters in group GB and the absence of any intermediate meter that could act as a relay to extend the range of communication, the meters in group GB are not in communication association with concentrator CA. Instead, the meters in group GB are listed on concentrator CB, and the concentrator CB is able to communicate with the meters in group GB via parasitic coupling between the network section B4 in Fig. 1 and the network section A2 in Fig. 1. According to this scenario, the meters in group GB are in communication association with concentrator CB although the meters in group GB are connected to a network section fed by secondary substation A and connected to concentrator CA.

The group G3 of meters including the meter M3 in the exemplary illustration of Fig. 1 represents the scenario that meters cannot be reached at all by a concentrator. According to this scenario, the meters in group G3 are listed on concentrator CB. However, due to the remote location of the meters in group G3 a reliable communication channel does not exist between the concentrator CB and the meters in group G3. Also, the meters in group G3 are not within reach of any other concentrator. Accordingly, the meters in group G3 are listed as 'bad' on concentrator CB. The meters in group GB are listed in this scenario on concentrator CB as 'good'. The meters in group GA are listed on concentrator CB as 'bad'. Meter Mi can communicate with concentrator CB and is listed on concentrator CB as 'good'.

Scenarios like the one described above in connection with group GA arise as a consequence of insufficient knowledge of the network topology. Scenarios like the one described in relation to group GB are examples for the fact that even a sound knowledge of the network topology is not always sufficient to optimize the association of meters and concentrators. Scenarios like the one described in relation with group G3 arise from deficiencies in the network design, which deficiencies have to be recognized before they can be remedied.

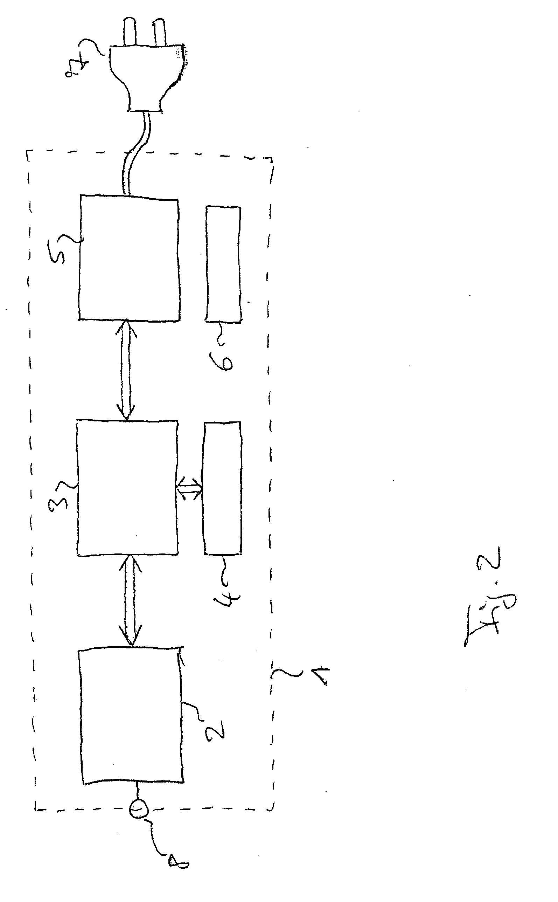

Fig. 2 shows an exemplary embodiment of an apparatus for detecting communication associations in an electricity distribution network implementing remote metering of electric energy consumptions, a schematic example of which has been provided in Fig. 1. The apparatus according to the exemplary embodiment of Fig. 2 is denoted with reference numeral 1. This apparatus comprises a power line communication part 5 and some kind of interface suitable for temporarily connecting the apparatus 1 to a section under investigation of the electricity distribution network, for example to section B3 in the vicinity of meters in group GA, in order to find out with which concentrator this section under investigation in the vicinity of the meters of group GA is in communication association. In the exemplary embodiment of Fig. 2, this interface simply comprises a mains plug 7 such that the apparatus 1 can be connected to a main socket in the vicinity of the network section under investigation. This interface is suitable for temporarily connecting the apparatus to a section under investigation. This interface can, of course, be embodied in a number of different ways.

The power line communication part 5 serves to send invitations to respond over the section under investigation to the electricity meters in the vicinity, and also serves to receive responses from meters in the vicinity of the section under investigation. Reference numeral 3 denotes a processing section. This processing section is in communication with the power line communication part 5. The processing section 3 in this embodiment controls the operation of the power line communication part 5 and also processes information received by the power line communication part 5. The processing section more particularly evaluates the responses received from the network section under investigation. Based on the responses received from the network section under investigation, the processing section 3 evaluates on which concentrator the meters responding to the invitations are respectively listed such that it can be concluded with which concentrator, if any, the network section under investigation is in communication association.

Reference numeral 4 denotes a storage section for importing information about meters listed on various concentrators around the network section under investigation. The information imported into the storage section comprises for each meter an identification of the meter and an indication on which concentrator the respective meter is listed. In the particular exemplary embodiment of Fig. 2, the storage section also stores for each meter either a 'good' indication indicating that the meter is able to communicate with the concentrator on which the meter is listed, or a 'bad' indication indicating that the meter is not able to communicate with the concentrator on which the meter is listed. If this information is available in the storage section 4, the processing section 3 is able to distinguish whether a meter responding to an invitation is able to communicate with the concentrator on which it is listed or not. Preferably, the processing section uses this information to ignore meters that are marked as 'bad' in order to increase the precision of detecting with which concentrator the network section under investigation is in communication association.

The apparatus according to the exemplary embodiment of Fig. 2 furthermore comprises a display section 2 for displaying the results of the evaluation carried out by the processing section 3. The apparatus furthermore comprises a data port for outputting information relating to the result of the evaluation to a PC. This data port can be of any suitable kind. Preferably, the data port is an optical port, a wireless or an USB port. Reference numeral 6 denotes an internal power supply section that draws power through the interface 7 from the network section under investigation.

## Claims

1. Apparatus (1) for detecting communication associations in an electricity distribution network implementing remote metering of electric energy consumptions,
the electricity distribution network comprising a plurality of sections (A1, A2, ..., B1, B2, ...) and one or more concentrators (CA, CB) connected to the electricity distribution network;
each concentrator being capable of communicating via power line communication with electricity meters connected to one or more electricity distribution network sections in communication association with the concentrator,
each concentrator storing a list comprising identities of electricity meters connected to the electricity distribution network and expected to communicate via power line communication with the concentrator;
the apparatus comprising
a storage section (4) for importing information about meters listed on a first concentrator as well as information at least about meters listed on a second concentrator, the imported information comprising for each meter an identification of the meter, an indication on which concentrator the respective meter is listed;
an interface suitable for temporarily connecting the apparatus to a section under investigation of the electricity distribution network;
a power line communication part for sending invitations to respond over the section under investigation and for receiving responses over the section under investigation from electricity meters connected to the electricity distribution network; and
a processing section for evaluating the received responses, taking into account on which concentrator the meters responding to the invitations are respectively listed;
wherein the evaluation of the received responses includes counting the number of responding meters listed on a respective concentrator.

2. The apparatus according to claim 1, wherein the imported information further comprises for each meter either a 'good' indication indicating that the meter is able to communicate with the concentrator on which the meter is listed, or a 'bad' indication indicating that the meter is not able to communicate with the concentrator on which the meter is listed.

3. The apparatus according to claim 2, wherein the invitations are point to point messages selectively addressing meters indicated as 'good'.

4. The apparatus according to any one of the preceding claims, wherein said power line communication part is adapted to selectively send invitations to meters indicated as 'bad'.

5. The apparatus according to any one of the claim 1, wherein the invitations are sent using a broadcast message.

6. The apparatus according to any one of the preceding claims, wherein said processing section is adapted to evaluate how many responding meters indicated as 'good' are respectively listed on the respective concentrators.

7. The apparatus according to claim 5, wherein said processing section is adapted to detect the identity of meters not listed on any one of the first and second concentrators.

8. The apparatus according to any one of the preceding claims, comprising display means for displaying information relating to the result of the evaluation.

9. The apparatus according to any one of the preceding claims, comprising a data port for outputting said information to a PC.

10. The apparatus according to any one of the preceding claims, wherein the storage section (4) is adapted for importing information about meters listed on one or more additional concentrators, the imported information comprising for each meter an identification of the meter, an indication on which concentrator the respective meter is listed, and a 'good'/'bad' indication indicating whether the meter is able to communicate with the concentrator on which the meter is listed.

11. Method for detecting communication associations in an electricity distribution network implementing remote metering of electric energy consumptions,
the electricity distribution network comprising a plurality of sections (A1, A2, ..., B1, B2, ...) and one or more concentrators (CA, CB) connected to the electricity distribution network;
each concentrator being capable of communicating via power line communication with electricity meters connected to one or more electricity distribution network sections in communication association with the concentrator,
each concentrator storing a list comprising identities of electricity meters connected to the electricity distribution network and expected to communicate via power line communication with the concentrator;
the method comprising
importing into a memory information about meters listed on a first concentrator as well as information at least about meters listed on a second concentrator, the imported information comprising for each meter an identification of the meter, an indication on which concentrator the respective meter is listed;
sending invitations to respond over the section under investigation to electricity meters and receiving responses over the section under investigation from electricity meters connected to the electricity distribution network; and
evaluating the received responses, taking into account on which concentrator the meters responding to the invitations are respectively listed;
wherein the evaluation of the received responses includes counting the number of responding meters listed on a respective concentrator.

12. The method according to claim 11, wherein the imported information further comprises for each meter either a 'good' indication indicating that the meter is able to communicate with the concentrator on which the meter is listed, or a 'bad' indication indicating that the meter is not able to communicate with the concentrator on which the meter is listed.

13. Computer program product comprising code executable by a computer which code when executed by the computer causes the computer to carry out a method according to any one of claims 11 and 12.

## Patentansprüche

1. Vorrichtung (1) zum Erfassen von Kommunikationszuordnungen in einem Stromverteilungsnetz, das eine Fernmessung von Verbräuchen der elektrischen Energie implementiert,
wobei das Stromverteilungsnetz eine Vielzahl von Abschnitten (A1, A2, ..., B1, B2, ...) und einen oder mehrere Konzentratoren (CA, CB), die an das Stromverteilungsnetz angeschlossen sind, umfasst,
wobei jeder Konzentrator in der Lage ist, mithilfe von Kommunikation über Stromleitungen (Powerline Communication) mit Stromzählern zu kommunizieren, die an einen oder mehrere Abschnitte des Stromverteilungsnetzes, die kommunikativ dem Konzentrator zugeordnet sind, angeschlossen sind,
wobei jeder Konzentrator eine Liste speichert, die Identitäten von Stromzählern umfasst, die an das Stromverteilungsnetz angeschlossen sind und von denen erwartet wird, dass sie mithilfe von Kommunikation über die Stromleitungen mit dem Konzentrator kommunizieren,
wobei die Vorrichtung umfasst
einen Speicherabschnitt (4) zum Einlesen von Informationen über Zähler, die an einem ersten Konzentrator gelistet sind, sowie von Informationen mindestens über Zähler, die an einem zweiten Konzentrator gelistet sind, wobei die eingelesenen Informationen für jeden Zähler eine Identifikation des Zählers, eine Angabe, an welchem Konzentrator der entsprechende Zähler gelistet ist, umfassen,
eine Schnittstelle, die geeignet ist, die Vorrichtung vorübergehend mit einem untersuchten Abschnitt des Stromverteilungsnetzes zu verbinden,
ein Bauelement für die Kommunikation über Stromleitungen zum Senden von Aufforderungen zum Antworten über den untersuchten Abschnitt und zum Empfangen von Antworten von den Stromzählern über den untersuchten Abschnitt, die an das Stromverteilungsnetz angeschlossen sind, und
einen Verarbeitungsabschnitt zum Auswerten der empfangenen Antworten, wobei berücksichtigt wird, an welchem Konzentrator die Zähler, die auf die Aufforderungen antworten, jeweils gelistet sind,
wobei die Auswertung der empfangenen Antworten ein Zählen der Anzahl von antwortenden Zählern, die an einem entsprechenden Konzentrator gelistet sind, umfasst.

2. Vorrichtung nach Anspruch 1, wobei die eingelesenen Informationen ferner für jeden Zähler entweder eine "gültig"-Angabe, die anzeigt, das der Zähler in der Lage ist, mit dem Konzentrator, an dem der Zähler gelistet ist, zu kommunizieren, oder eine "ungültig"-Angabe umfassen, die anzeigt, dass der Zähler nicht in der Lage ist, mit dem Konzentrator, an dem der Zähler gelistet ist, zu kommunizieren.

3. Vorrichtung nach Anspruch 2, wobei die Aufforderungen Punkt-zu-Punkt-Meldungen sind, die gezielt Zähler ansprechen, die als "gültig" angezeigt sind.

4. Vorrichtung nach einem der vorhergehenden Ansprüche, wobei das Bauelement zur Kommunikation über Stromleitungen geeignet ist, Aufforderungen gezielt an Zähler zu senden, die als "ungültig" angezeigt sind.

5. Vorrichtung nach Anspruch 1, wobei die Aufforderungen unter Verwendung einer Rundsendenachricht gesendet werden.

6. Vorrichtung nach einem der vorhergehenden Ansprüche, wobei der Verarbeitungsabschnitt geeignet ist auszuwerten, wie viele von den antwortenden Zählern, die als "gültig" angezeigt sind, jeweils an den jeweiligen Konzentratoren gelistet sind.

7. Vorrichtung nach Anspruch 5, wobei der Verarbeitungsabschnitt geeignet ist, die Identität von Zählern zu erfassen, die an keinem von dem ersten und dem zweiten Konzentrator gelistet sind.

8. Vorrichtung nach einem der vorhergehenden Ansprüche, die eine Anzeigeeinrichtung zum Anzeigen von Informationen umfasst, die sich auf das Ergebnis der Auswertung beziehen.

9. Vorrichtung nach einem der vorhergehenden Ansprüche, die einen Datenanschluss zum Ausgeben der Informationen an einen PC umfasst.

10. Vorrichtung nach einem der vorhergehenden Ansprüche, wobei der Speicherabschnitt (4) geeignet ist, Informationen über Zähler, die an einem oder mehreren zusätzlichen Konzentratoren gelistet sind, einzulesen, wobei die eingelesenen Informationen für jeden Zähler eine Identifikation des Zählers, eine Angabe, an welchem Konzentrator der jeweilige Zähler gelistet ist, und eine "gültig"-/"ungültig"-Angabe umfassen, die anzeigt, ob der Zähler in der Lage ist, mit dem Konzentrator zu kommunizieren, an dem der Zähler gelistet ist.

11. Verfahren zum Erfassen von Kommunikationszuordnungen in einem Stromverteilungsnetz, das eine Fernmessung von Verbräuchen der elektrischen Energie implementiert,
wobei das Stromverteilungsnetz eine Vielzahl von Abschnitten (A1, A2, ..., B1, B2, ...) und einen oder mehrere Konzentratoren (CA, CB), die an das Stromverteilungsnetz angeschlossen sind, umfasst,
wobei jeder Konzentrator in der Lage ist, mithilfe von Kommunikation über Stromleitungen mit Stromzählern zu kommunizieren, die an einen oder mehrere Abschnitte des Stromverteilungsnetzes, die kommunikativ dem Konzentrator zugeordnet sind, angeschlossen sind,
wobei jeder Konzentrator eine Liste speichert, die Identitäten von Stromzählern umfasst, die an das Stromverteilungsnetz angeschlossen sind und von denen erwartet wird, dass sie mithilfe von Kommunikation über Stromleitungen mit dem Konzentrator kommunizieren,
wobei das Verfahren umfasst
Einlesen von Informationen über Zähler, die an einem ersten Konzentrator gelistet sind, sowie von Informationen mindestens über Zähler, die an einem zweiten Konzentrator gelistet sind, in einen Speicher, wobei die eingelesenen Informationen für jeden Zähler eine Identifikation des Zählers, eine Angabe, an welchem Konzentrator der jeweilige Zähler gelistet ist, umfassen,
Senden von Aufforderungen zum Antworten über den untersuchten Abschnitt und Empfangen von Antworten von Stromzählern über den untersuchten Abschnitt, die an das Stromverteilungsnetz angeschlossen sind, und
Auswerten der empfangenen Antworten, wobei berücksichtigt wird, an welchem Konzentrator die Zähler, die auf die Aufforderungen antworten, jeweils gelistet sind,
wobei die Auswertung der empfangenen Antworten ein Zählen der Anzahl von antwortenden Zählern umfasst, die an einem jeweiligen Konzentrator gelistet sind.

12. Verfahren nach Anspruch 11, wobei die eingelesenen Informationen ferner für jeden Zähler entweder eine "gültig"-Angabe, die anzeigt, das der Zähler in der Lage ist, mit dem Konzentrator, an dem der Zähler gelistet ist, zu kommunizieren, oder eine "ungültig"-Angabe umfassen, die anzeigt, dass der Zähler nicht in der Lage ist, mit dem Konzentrator, an dem der Zähler gelistet ist, zu kommunizieren.

13. Computerprogrammprodukt, das einen durch einen Computer ausführbaren Code umfasst, der, wenn vom Computer ausgeführt, den Computer dazu veranlasst, ein Verfahren nach einem der Ansprüche 11 und 12 auszuführen.

## Revendications

1. Appareil (1) permettant de détecter des associations de communication dans un réseau de distribution d'électricité mettant en oeuvre une mesure à distance des consommations d'énergie électrique,
le réseau de distribution d'électricité comprenant une pluralité de sections (A1, A2, ..., B1, B2, ...) et un ou plusieurs concentrateur(s) (CA, CB) relié(s) au réseau de distribution d'électricité ;
chaque concentrateur étant capable de communiquer par l'intermédiaire d'une communication sur une ligne d'alimentation avec des compteurs d'électricité reliés à une ou plusieurs section(s) de réseau de distribution d'électricité dans une association de communication avec le concentrateur,
chaque concentrateur stockant une liste qui comprend des identités de compteurs d'électricité reliés au réseau de distribution d'électricité et destinés à communiquer par l'intermédiaire d'une communication sur une ligne d'alimentation avec le concentrateur ;
l'appareil comprenant
une section de stockage (4) pour importer des informations concernant des compteurs figurant sur un premier concentrateur ainsi que des informations concernant au moins des compteurs figurant sur un deuxième concentrateur, les informations importées comprenant pour chaque compteur une identification du compteur, une indication spécifiant sur quel concentrateur figure le compteur respectif ;
une interface appropriée pour relier temporairement l'appareil à une section en cours d'examen du réseau de distribution d'électricité ;
une partie de communication sur une ligne d'alimentation pour envoyer une invitation à répondre sur la section en cours d'examen et pour recevoir des réponses sur la section en cours d'examen provenant de compteurs d'électricité reliés au réseau de distribution d'électricité ; et
une section de traitement pour évaluer les réponses reçues, en prenant en compte sur quel concentrateur figurent respectivement les compteurs qui répondent aux invitations ;
où l'évaluation des réponses reçues comporte le comptage du nombre de compteurs répondant qui figurent sur un concentrateur respectif.

2. Appareil selon la revendication 1, dans lequel les informations importées comprennent en outre pour chaque compteur soit une indication 'bon' indiquant que le compteur est capable de communiquer avec le concentrateur sur lequel figure le compteur, ou une indication 'mauvais' indiquant que le compteur n'est pas capable de communiquer avec le concentrateur sur lequel figure le compteur.

3. Appareil selon la revendication 2, dans lequel les invitations sont des messages point à point adressant de manière sélective des compteurs ayant une indication 'bon'.

4. Appareil selon l'une quelconque des revendications précédentes, dans lequel ladite partie de communication sur une ligne d'alimentation est adaptée pour envoyer de manière sélective des invitations à des compteurs ayant une indication 'mauvais'.

5. Appareil selon la revendication 1, dans lequel les invitations sont envoyées en utilisant un message de diffusion.

6. Appareil selon l'une quelconque des revendications précédentes, dans lequel ladite section de traitement est adaptée pour évaluer combien de compteurs répondant, ayant une indication 'bon', figurent respectivement sur les concentrateurs respectifs.

7. Appareil selon la revendication 5, dans lequel ladite section de traitement est adaptée pour détecter l'identité de compteurs ne figurant sur aucun des premier et deuxième concentrateurs.

8. Appareil selon l'une quelconque des revendications précédentes, comprenant un moyen d'affichage pour afficher des informations relatives au résultat de l'évaluation.

9. Appareil selon l'une quelconque des revendications précédentes, comprenant un port de données pour délivrer en sortie lesdites informations à un ordinateur personnel PC.

10. Appareil selon l'une quelconque des revendications précédentes, dans lequel la section de stockage (4) est adaptée pour importer des informations concernant des compteurs figurant sur un ou plusieurs concentrateur(s) supplémentaire(s), les informations importées comprenant pour chaque compteur une identification du compteur, une indication spécifiant sur quel concentrateur figure le compteur respectif, et une indication 'bon'/'mauvais' indiquant si le compteur est capable de communiquer avec le concentrateur sur lequel figure le compteur.

11. Procédé permettant de détecter des associations de communication dans un réseau de distribution d'électricité mettant en oeuvre une mesure à distance des consommations d'énergie électrique,
le réseau de distribution d'électricité comprenant une pluralité de sections (A1, A2, ..., B1, B2, ...) et un ou plusieurs concentrateur(s) (CA, CB) reliés au réseau de distribution d'électricité ;
chaque concentrateur pouvant communiquer par l'intermédiaire d'une communication sur une ligne d'alimentation avec des compteurs d'électricité reliés à une ou plusieurs section(s) de réseau de distribution d'électricité dans une association de communication avec le concentrateur,
chaque concentrateur stockant une liste qui comprend des identités de compteurs d'électricité reliés au réseau de distribution d'électricité et destinés à communiquer par l'intermédiaire d'une communication sur une ligne d'alimentation avec le concentrateur ;
le procédé comprenant le fait
d'importer dans une mémoire des informations concernant des compteurs figurant sur un premier concentrateur ainsi que des informations concernant au moins des compteurs figurant sur un deuxième concentrateur, les informations importées comprenant pour chaque compteur une identification du compteur, une indication spécifiant sur quel concentrateur figure le compteur respectif ;
d'envoyer des invitations à répondre sur la section en cours d'examen à des compteurs d'électricité et de recevoir des réponses sur la section en cours d'examen provenant de compteurs d'électricité reliés au réseau de distribution d'électricité ; et
d'évaluer les réponses reçues, en prenant en compte sur quel concentrateur figurent respectivement les compteurs qui répondent aux invitations ;
où l'évaluation des réponses reçues comporte le comptage du nombre de compteurs répondant figurant sur un concentrateur respectif.

12. Procédé selon la revendication 11, dans lequel les informations importées comprennent en outre pour chaque compteur soit une indication 'bon' indiquant que le compteur est capable de communiquer avec le concentrateur sur lequel figure le compteur, ou une indication 'mauvais' indiquant que le compteur n'est pas capable de communiquer avec le concentrateur sur lequel figure le compteur.

13. Produit de programme informatique comprenant un code exécutable par un ordinateur, lequel code, lorsqu'il est exécuté par l'ordinateur, amène l'ordinateur à mettre en oeuvre un procédé selon l'une quelconque des revendications 11 et 12.
